# EUROPEAN PATENT APPLICATION

(11) **EP 4 535 310 A1**
(43) Date of publication of application: **09.04.2025**
(21) Application number: 23815763.0
(22) Date of filing: 16.05.2023
(51) Int. Cl.: G06V 40/16, G06T 7/00, H04N 23/60, H04N 23/65, H04N 23/66

(54) **INFORMATION PROCESSING DEVICE, INFORMATION PROCESSING METHOD, AND PROGRAM**

(30) Priority: 02.06.2022 JP 2022090032
(71) Applicant: Sony Group Corporation, Tokyo 108-0075 (JP)
(72) Inventor: SATO, Tatsuhito, Tokyo 108-0075 (JP); WAKASUGI, Shunya, Tokyo 108-0075 (JP)
(74) Representative: MFG Patentanwälte Meyer-Wildhagen Meggle-Freund Gerhard PartG mbB
(86) International application number: PCT/JP2023/018218
(87) International publication number: WO 2023/234003

(57) **Abstract**

The present technology relates to an information processing apparatus, an information processing method, and a program that allow for reduction in power consumption in authentication using multiple cameras.

The information processing device performs camera search processing of searching for a camera suitable for authentication of a target among non-activated cameras yet to be activated, on the basis of a position and an angle of the target estimated from an image captured by an active camera which is an activated camera among multiple cameras, and activating the camera found by the search. The present technology can be applied to facial recognition systems.

## Description

### [Technical Field]

The present technology relates to an information processing device, an information processing method, and a program, and particularly to an information processing device, an information processing method, and a program that allow for reduction in power consumption in authentication using multiple cameras.

### [Background Art]

It has been known that in facial recognition, the use of multiple cameras to capture images of faces from various angles can improve recognition accuracy. (see PTL 1).

### [Citation List]

### [Patent Literature]

[PTL 1]
JP 2004-192378A

### [Summary]

### [Technical Problem]

Meanwhile, in use cases, e.g., facial recognition gates and surveillance cameras, since there is no knowing when a target for facial recognition will appear, each camera has to continuously perform processing of detecting a target.

If such a use case is implemented by using multiple cameras, the multiple cameras are continuously activated and facial detection processing is performed on each camera image, even though targets are not detected for much of the time. This is significantly inefficient in terms of power consumption and device durability.

The present technology has been developed in view of such circumstances and is directed to reducing power consumption in authentication that uses multiple cameras.

### [Solution to Problem]

An information processing device according to one aspect of the present technology includes a control unit configured to perform camera search processing of searching for a camera suitable for authentication of a target among non-activated cameras which are yet to be activated, on the basis of a position and an angle of the target estimated from an image captured by an active camera which is an activated camera among multiple cameras, and activating the camera found by the search.

According to one aspect of the present technology, a camera suitable for authentication of a target is searched for among non-activated cameras which are yet to be activated on the basis of a position and an angle of the target estimated from an image captured by an active camera which is an activated camera among multiple cameras and the camera found by the search is activated.

### [Brief Description of Drawing]

[Fig. 1]

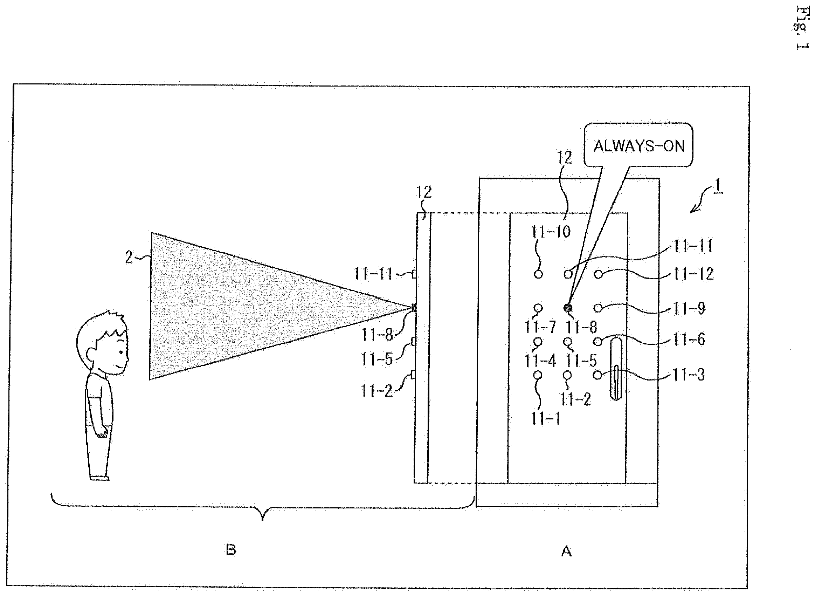

   Fig. 1 is a diagram of a configuration example of the appearance of a facial recognition system according to a first embodiment of the present technology.
[Fig. 2]

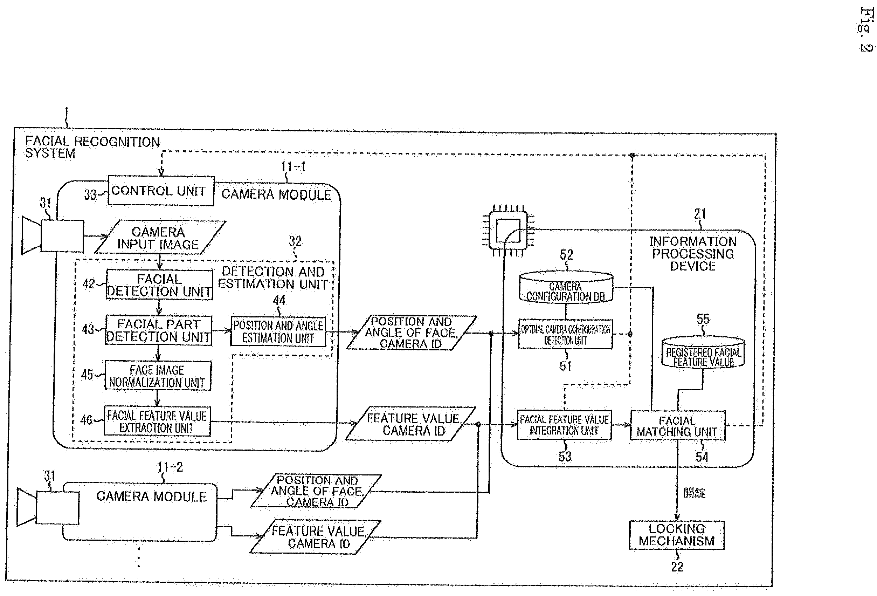

   Fig. 2 is a block diagram of a functional configuration example of the facial recognition system in Fig. 1.
[Fig. 3]

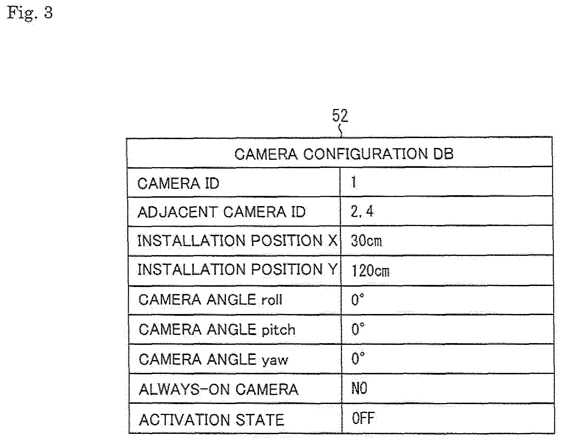

   Fig. 3 illustrates a configuration example of a camera configuration DB.
[Fig. 4]

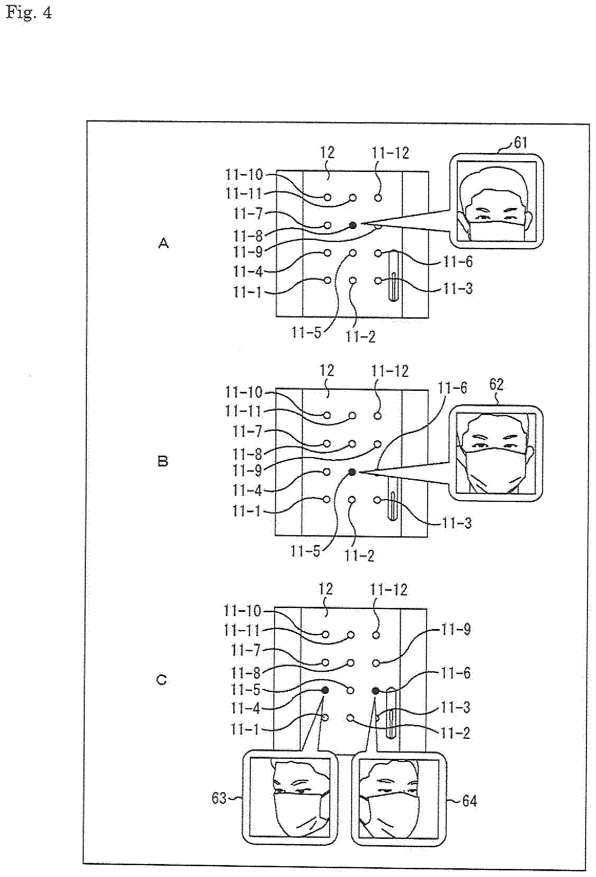

   Fig. 4 illustrates examples of images captured by camera modules.
[Fig. 5]

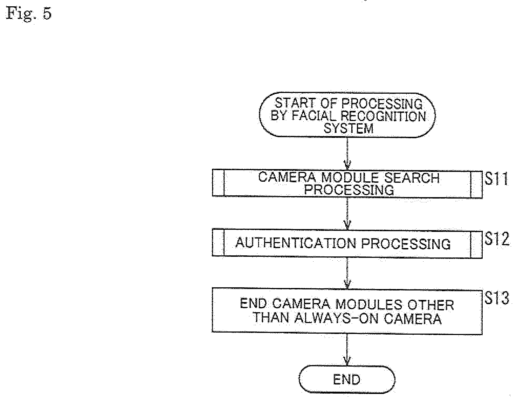

   Fig. 5 is a flowchart for illustrating processing by the facial recognition system in Fig. 1.
[Fig. 6]

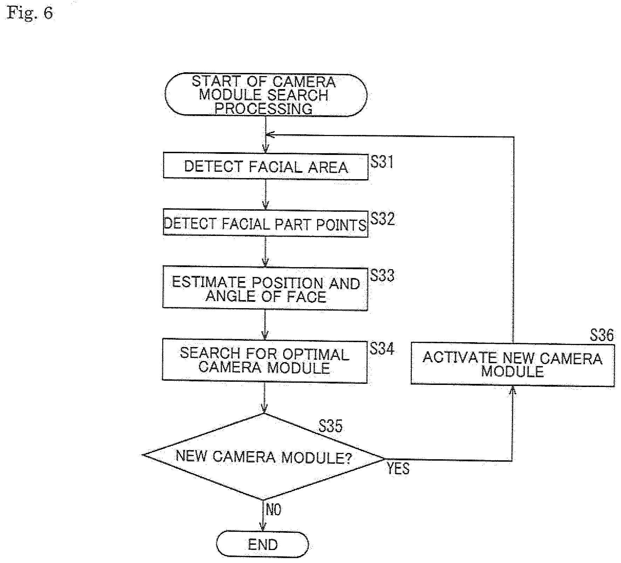

   Fig. 6 is a flowchart for illustrating camera module search processing in step S11 in Fig. 5.
[Fig. 7]

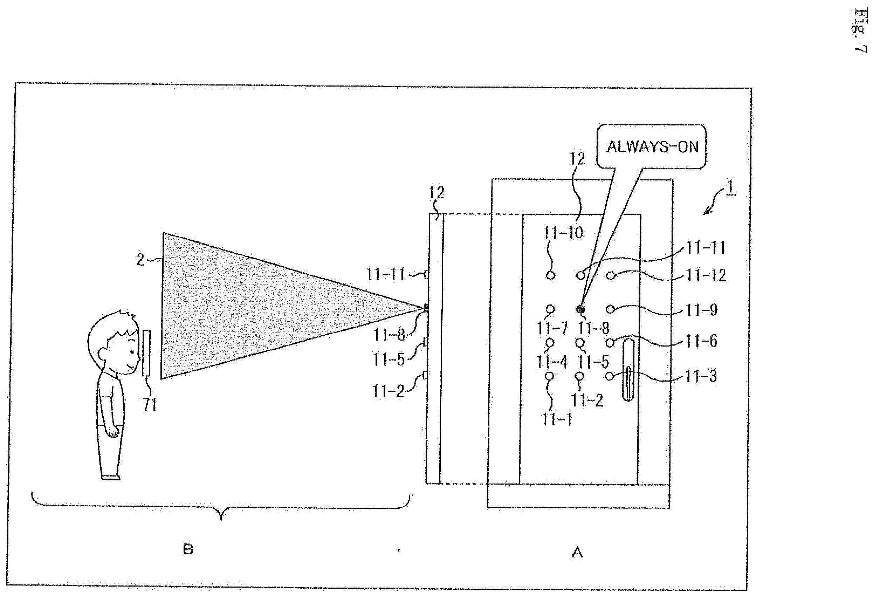

   Fig. 7 is a view of an example of a facial area detected in step S31 in Fig. 6.
[Fig. 8]

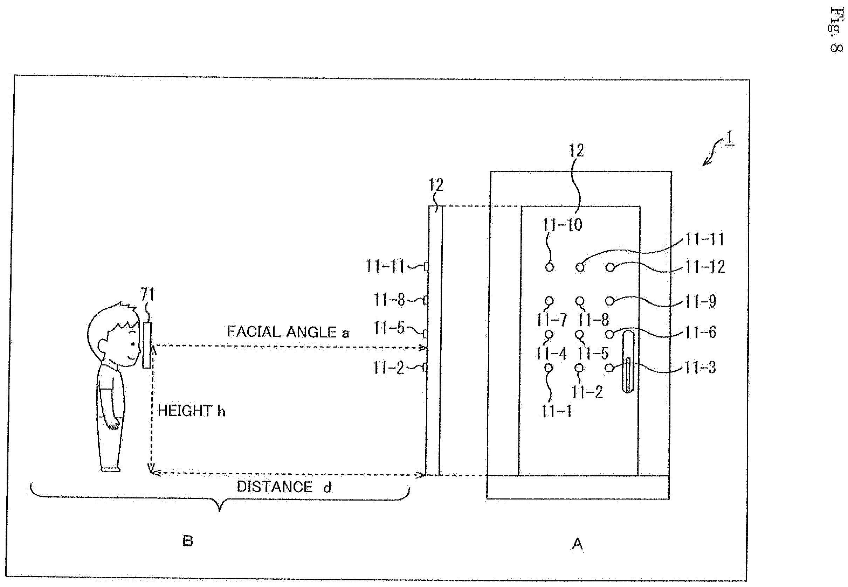

   Fig. 8 is a view of examples of the position and angle of the face estimated in step S33.
[Fig. 9]

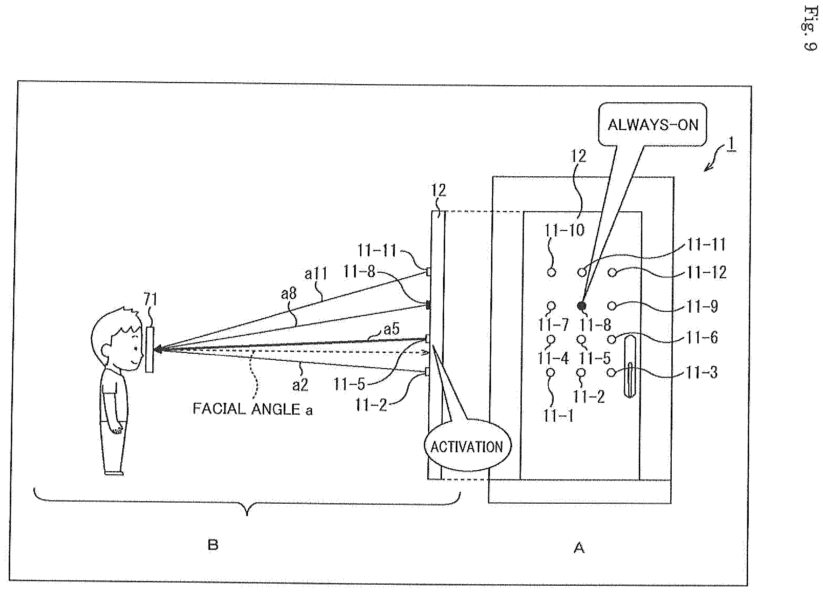

   Fig. 9 is a view of an example of optimal camera module search in step S34 in Fig. 6.
[Fig. 10]

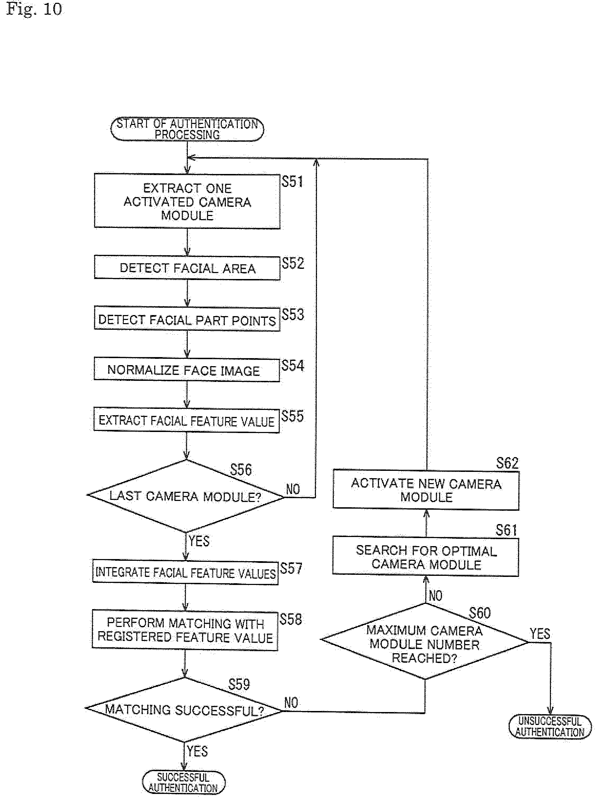

   Fig. 10 is a flowchart for illustrating authentication processing in step S12 in Fig. 5.
[Fig. 11]

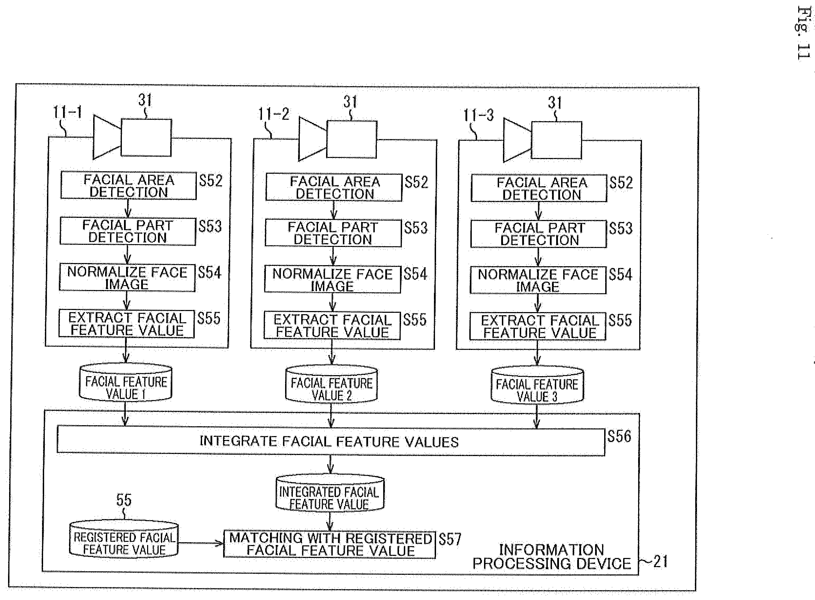

   Fig. 11 is a schematic diagram of operation in the camera modules and the information processing device of the facial recognition system.
[Fig. 12]

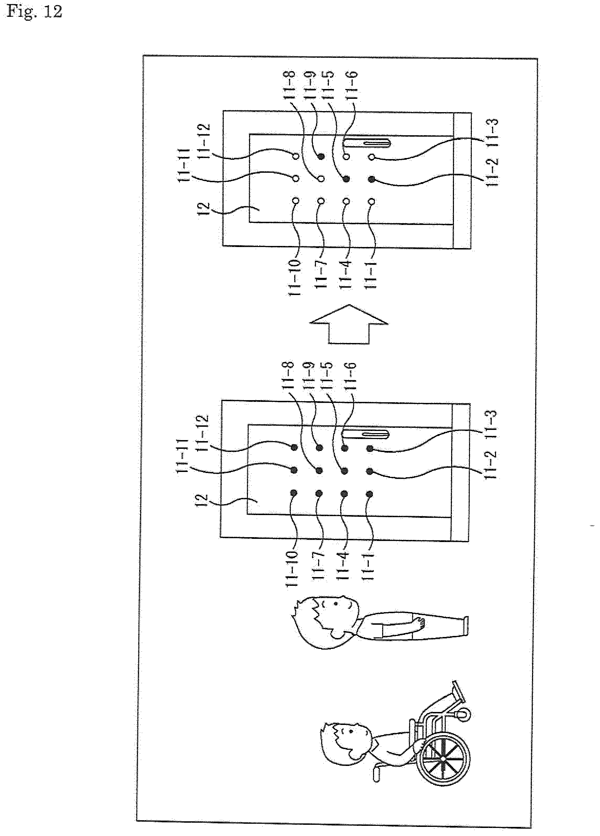

   Fig. 12 is a view for illustrating how an always-on camera is set.
[Fig. 13]

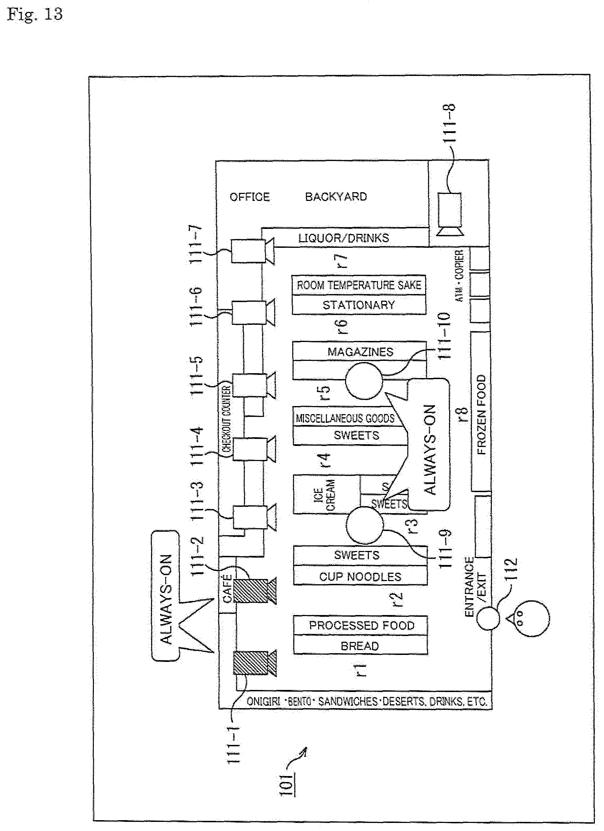

   Fig. 13 illustrates a configuration example of the appearance of a human body authentication system according to a second embodiment of the present technology.
[Fig. 14]

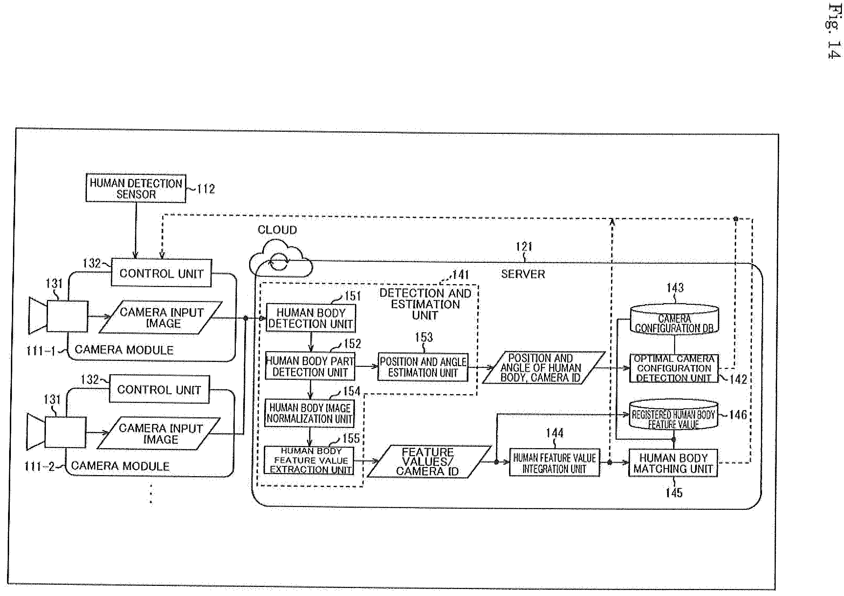

   Fig. 14 is a block diagram of a functional configuration example of the human authentication system in Fig. 13.
[Fig. 15]

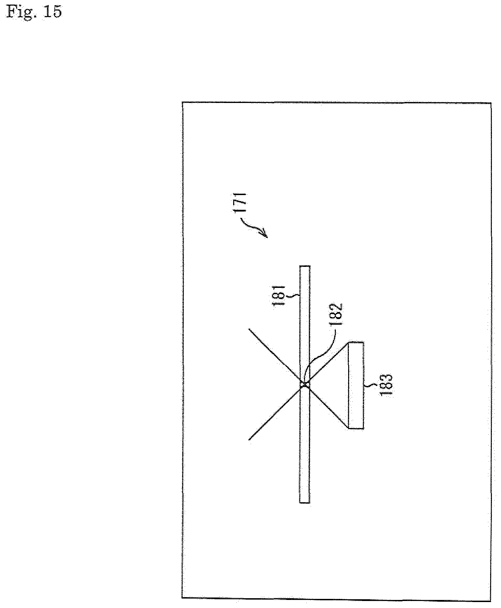

   Fig. 15 is a view of a configuration example of a lensless camera that forms an image without a lens.
[Fig. 16]

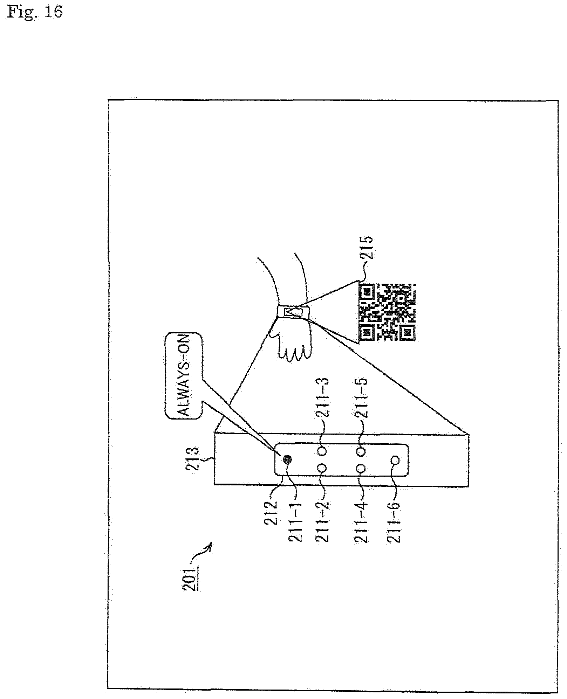

   Fig. 16 is a view of a configuration example of the appearance of a wearable device according to a third embodiment of the present technology.
[Fig. 17]

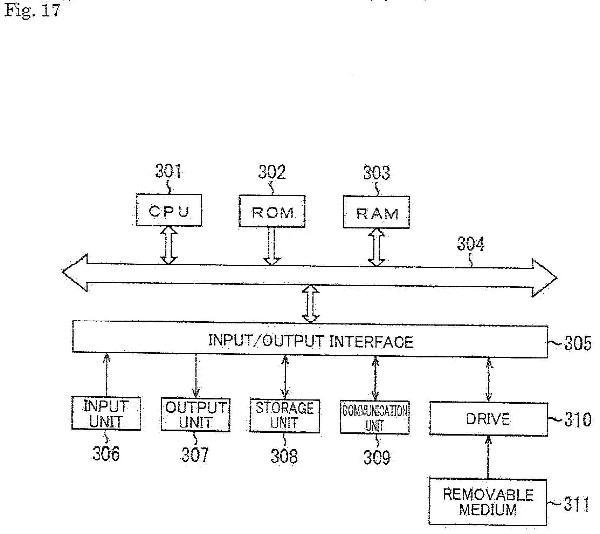

   Fig. 17 is a block diagram of a configuration example of a computer.

### [Description of Embodiments]

Hereinafter, modes for carrying out the present technology will be described. The description will be made in the following order.
1. First Embodiment (Facial recognition system)
2. Second Embodiment (Human body authentication system)
3. Third Embodiment (Wearable device)
4. Others

### 1. First Embodiment (Facial recognition system)

### <Configuration of facial recognition system>

Fig. 1 is a diagram of a configuration example of the appearance of a facial recognition system According to a first embodiment of the present technology.

Fig. 1 at A is a front view of the appearance of the facial recognition system. Fig. 1 at B is a side view of the appearance of the facial recognition system.

The facial recognition system 1 in Fig. 1 is configured to include a door 12 provided with multiple camera modules 11-1 to 11-12. The door 12 is normally locked and is unlocked upon successful authentication by the facial recognition system 1.

The camera modules 11-1 to 11-12 are arranged in three horizontal rows and four vertical columns on the door 12. The camera module 11-1 is provided on the left side in the bottom row. The camera module 11-2 is provided in the center in the bottom row. The camera module 11-3 is provided on the right side in the bottom row.

The camera module 11-4 is provided on the left side in the second row from the bottom. The camera module 11-5 is provided in the center in the second row from the bottom. The camera module 11-6 is provided on the right side in the second row from the bottom.

The camera module 11-7 is provided on the left side in the second row from the top. The camera module 11-8 is provided in the center in the second row from the top. The camera module 11-9 is provided on the right side in the second row from the top.

The camera module 11-10 is provided on the left side in the top row. The camera module 11-11 is located in the center in the top row. The camera module 11-12 is provided on the right side in the top row. When there is no need to distinguish between individual camera modules 11-1 to 11-12, these camera modules will be collectively referred to as camera module 11.

At least one of the camera modules 11 (in Fig. 1, the camera module 11-8) is an always-on camera and is always activated. The always-on camera is preset among the camera modules 11.

The camera modules 11 other than the always-on camera are normally in a stopped state. The stopped state may be a power-off state or a sleep state in which only some functions are activated.

The camera module 11-8, which is an always-on camera, captures an image of the face of a user stands in front of the door 12 to enter the house and waits for authentication by the facial recognition system 1.

Fig. 1 illustrates an imaging range 2 to be captured by the camera module 11-8, which is an always-on camera. The imaging range 2 is represented in Fig. 1 by the base of a triangle with the camera module 11-8 at the apex.

The camera module 11-8 extracts feature values of the user's face using the captured image. However, in this example, the camera module 11-8 cannot capture the user's face at the center of its imaging range. Therefore, the accuracy of the feature values extracted using the image captured by the camera module 11-8 may not be high.

Therefore, the facial recognition system 1 searches for any of other camera modules 11 that can capture images of the user's face from the most frontal position on the basis of the position and angle of the user's face estimated using the image captured by the activated camera module 11-8 (the activated camera), and activates the camera module 11 found by the search. In this way, the camera module 11 suitable for authentication of the user's face is activated.

The facial recognition system 1 then controls the activated camera module 11 to extract feature values of the user's face and authenticates the user's face on the basis of the facial feature value information indicating the feature values of the user's face supplied by the camera module 11. When the user's face is authenticated, the door 12, which is normally locked, is unlocked.

### <Functional configuration of facial recognition system>

Fig. 2 is a block diagram of a functional configuration example of the facial recognition system in Fig. 1.

In Fig. 2, the facial recognition system 1 is configured to include the camera module 11-1, the camera module 11-2, ..., an information processing device 21, and a locking mechanism 22.

The camera module 11 is configured to include an imaging unit 31, a detection and estimation unit 32, and a control unit 33.

The imaging unit 31 captures an image of an object and outputs a camera input image obtained by capturing the image of the object to the detection and estimation unit 32.

The detection and estimation unit 32 performs processing on the camera input image supplied by the imaging unit 31. The detection and estimation unit 32 is configured to include a facial detection unit 42, a facial part detection unit 43, a face image normalization unit 45, and a facial feature value extraction unit 46.

The facial detection unit 42 detects a facial area from the camera input image supplied from the imaging unit 31 and outputs the camera input image and facial area information indicating the detected facial area to the facial part detection unit 43.

On the basis of the camera input image and the facial area information supplied by the facial detection unit 42, the facial part detection unit 43 detects facial part points indicating the positions of four facial features, i.e., both eyes, the nose, and the mouth, from the facial area detected by the facial detection unit 42.

The facial part detection unit 43 outputs the camera input image, the facial area information, and facial part point information indicating the detected facial part points to the position and angle estimation unit 44 and the face image normalization unit 45.

The position and angle estimation unit 44 uses the camera input image, the facial area information, and the facial part point information supplied by the facial part detection unit 43 to estimate the position of the face and the angle of the face.

The position and angle estimation unit 44 transmits information indicating the estimated position and angle of the face to the information processing device 21 with its own camera ID (Identifier) attached.

The face image normalization unit 45 normalizes the face image using the camera input image, the facial area information, and the facial part point information supplied by the facial part detection unit 43. The face image normalization unit 45 outputs the normalized face image, which is a normalized face image, the facial area information, and the facial part point information to the facial feature value extraction unit 46.

The facial feature value extraction unit 46 extracts facial feature values using the normalized face image, the facial area information, and the facial part point information supplied by the face image normalization unit 45. The facial feature value extraction unit 46 transmits the facial feature value information indicating the extracted facial feature values to the information processing device 21 along with its own camera ID.

The control unit 33 controls various parts of the camera module 11 in response to control from the information processing device 21. The control unit 33 also activates or stops the camera module 11 in response to control from the information processing device 21. The activation of the camera module 11 may refer to activation of each part of the camera module 11, i.e., activation of the imaging unit 31 and the detection and estimation unit 32, or activation of the detection and estimation unit 32 while the imaging unit 31 has already been activated.

The information processing device 21 is configured to include an optimal camera configuration search unit 51, a camera configuration DB (Data Base) 52, a facial feature value integration unit 53, a facial matching unit 54, and a registered facial feature value DB 55.

The optimal camera configuration search unit 51 searches among the camera modules 11 that have not been activated for the camera module 11 that can capture an image of the detected face from the most frontal position, by referring to the information indicating the position and angle of the face and the camera ID supplied by the position and angle estimation unit 44 and the information registered in the camera configuration DB 52.

The optimal camera configuration search unit 51 controls the control unit 33 of the camera module 11 found by the search to activate the camera module 11.

The camera configuration DB 52 registers information about each camera module 11.

The facial feature value integration unit 53 controls the control unit 33 of the activated camera module 11 to perform facial feature value extraction.

The facial feature value integration unit 53 performs integration of the facial feature values based on the facial feature value information and the camera ID supplied by the facial feature value extraction unit 46. The integration of the facial feature values is performed, for example, by summing and averaging the facial feature values. The facial feature value integration unit 53 outputs integrated facial feature value information, which indicates the integrated facial feature value, to the facial matching unit 54.

The facial matching unit 54 refers to the information registered in the camera configuration DB 52 and matches the integrated facial feature value indicated by the integrated facial feature value information supplied by the facial feature value integration unit 53 with the registered facial feature values registered in the registered facial feature value DB 55.

The facial feature values are matched by taking the dot product of the two arrays, namely the integrated facial feature values and the registered facial feature values.

If the matching is successful, the facial matching unit 54 determines that the user's face has been successfully authenticated and unlocks the locking mechanism 22. If the matching is successful, the facial matching unit 54 also controls the control units 33 of the camera modules 11 other than the always-on camera to stop the corresponding camera modules 11.

The locking mechanism 22 is provided at the door 12. The locking mechanism 22 is locked by closing the door 12 and is unlocked in response to the control of the facial matching unit 54.

In the facial recognition system 1 in Fig. 2, the detection and estimation unit 32 is provided in each of the camera modules 11, but the detection and estimation unit 32 may be provided in the information processing device 21.

### <Configuration of camera configuration DB>

Fig. 3 is a diagram of a configuration example of a camera configuration DB.

The camera configuration DB 52 is configured to include information related to each camera module 11, including the camera ID, the adjacent camera ID, the installation position X, the installation position Y, the camera angle roll, the camera angle pitch, the camera angle yaw, and information about the always-on camera, and the activation state.

The camera ID indicates the identification information of the camera module 11. In the case in Fig. 3, the camera ID is 1.

The adjacent camera ID indicates the identification information of a camera module 11 adjacent to the camera module 11 indicated by the camera ID. In the case in Fig. 3, the adjacent camera IDs are 2 and 4.

The installation positions X and Y indicate the X and Y coordinates of the installation position of the camera module 11 indicated by the camera ID. For example, the lower left corner of door 12 is used as the origin. In the case of Fig. 3, the installation positions X and Y are 30 cm and 120 cm, respectively.

The camera angle roll, the camera angle pitch, and the camera angle yaw indicate the respective installation angles, the roll, pitch 1, and yaw of the camera module 11 indicated by the camera ID. In Fig. 3, the camera angle roll, the camera angle pitch, and the camera angle yaw are all 0 degrees.

The information on the always-on camera indicates whether the camera module 11 indicated by the camera ID is an always-on camera. In the case of Fig. 3, the camera module 11 indicated by the camera ID is not an always-on camera, and therefore the always-on camera is set to NO.

The activation state is information indicating the activation state of the camera module 11 indicated by the camera ID. In the case of Fig. 3, the activation state of the camera module 11 indicated by the camera ID is OFF. When the camera module 11 is activated, the activation state becomes ON.

### <Images captured by camera modules>

Fig. 4 illustrates examples of images captured by the camera modules 11.

In the facial recognition system 1, the activated camera module 11 captures an image of a user, as the user stands in front of the door 12 and waits for authenticated by the facial recognition system 1 in order to enter the house as described above with reference to Fig. 1. In the example in Fig. 4, the user is shown wearing a mask.

Fig. 4 at A illustrates an image 61 captured by the camera module 11-8. In the center of the image 61, the area between the eyebrows of the user's face, captured from the front, is shown.

Fig. 4 at B illustrates an image 62 captured by the camera module 11-5. Since the camera module 11-5 is positioned directly below the camera module 11-8 at the door 12, the center of the image 62 illustrates the nose of the user's face captured from the front.

Fig. 4 at C illustrates an image 63 captured by camera module 11-4 and an image 64 captured by the camera module 11-6.

Since the camera module 11-4 is located to the left of the camera module 11-5 at the door 12, the center of the image 63 illustrates the image of the nose of the user's face captured diagonally from the left.

Since the camera module 11-6 is located to the right of the camera module 11-5 at the door 12, the center of image 64 illustrates the image of the nose of the user's face captured diagonally from the right.

### <Processing by facial recognition system>

Fig. 5 is a flowchart for illustrating processing by the facial recognition system in Fig. 1.

Fig. 4 will be referred to as appropriate in the following description in connection with Fig. 5

For example, the user stands in front of door 12 to enter the house and waits for authentication by the facial recognition system 1.

In step S11, the facial recognition system 1 performs camera module detection processing.

At the start of processing, only at least one always-on camera module 11 (for example, camera module 11-8) is activated. The position and angle of the user's face are estimated from an image captured by the camera module 11-8.

In the camera module search processing, the camera modules 11 yet to be activated (non-activated cameras) are activated until the camera module 11 that can capture an image of the user's face from the most frontal position is found by the search on the basis of the estimated position and angle of the user's face.

For example, the position and angle of the user's face are estimated from the image 61A (Fig. 4 at A) captured by camera module 11-8, and the camera module 11-5 that can capture an image of the user's face from the most frontal position, as shown in the image 61B (Fig. 4 at B), is found by search.

In step S12, the facial recognition system 1 executes facial recognition processing.

The facial recognition system 1 first performs facial recognition using the camera module 11 found by the search in step S11 and activated. If the authentication is not successful using the activated camera module 11, the facial recognition system 1 sequentially activates the camera modules 11 surrounding the camera module 11 found in step S11, starting with the camera module 11 closest to the front, until the facial recognition is successful.

The image captured by the activated camera module 11 is added as an image used for the authentication processing.

If for example the image captured by the camera module 11-5 is used as the image for the authentication processing and the authentication is not successful, the camera module 11-4 in the vicinity of the camera module 11-5 is activated and the image 63 captured by the activated camera module 11-4 is added as an image used for the authentication processing.

If the authentication is even then unsuccessful, the camera module 11-6 in the vicinity of the camera module 11-5 is activated, and the image 64 captured by the activated camera module 11-6 is added as an image to be used for the authentication processing.

As described above, images captured by the camera modules 11 at different positions are added as images used for the authentication processing, thus increasing the accuracy of facial authentication.

For example, the authentication accuracy of a face image with shielding, such as a masked face as shown in Fig. 4, can be greatly improved by adding face images captured by different camera modules 11 from multiple angles to increase the information about the face.

When the facial authentication processing is successful, the process proceeds to step S13.

In step S13, the facial recognition system 1 stops the camera modules 11 other than the always-on camera. Then, the processing in Fig. 5 ends.

### <Camera module search processing>

Fig. 6 is a flowchart for illustrating the camera module search processing in step S11 in Fig. 5.

When the processing starts, the imaging unit 31 of the camera module 11 (e.g., the camera module 11-8), which is an always-on camera, captures an image of the user's face to generate a camera input image and outputs the generated camera input image to the facial detection unit 42.

In step S31, the facial detection unit 42 detects the facial area of the user in the camera input image. The camera input image and the detected facial area information are output to the facial part detection unit 43.

In step S32, the facial part detection unit 43 detects the facial part points in the facial area detected by the facial detection unit 42. The facial part detection unit 43 outputs the camera input image, the facial area information, and the facial part point information to the position and angle estimation unit 44.

In step S33, the position and angle estimation unit 44 estimates the position and angle of the face on the basis of the camera input image, the facial area information, and the facial part point information. The position and angle estimation unit 44 outputs information on the estimated position and angle of the face and the camera ID of the camera module 11-8 to the optimal camera configuration search unit 51 of the information processing device 21.

In step S34, the optimal camera configuration search unit 51 searches for the optimal camera module 11 on the basis of the information on the position and angle of the face and the camera ID of the camera module 11-8 supplied by the position and angle estimation unit 44, and the information registered in the camera configuration DB 52.

In step S35, the optimal camera configuration search unit 51 determines whether the camera module 11 found by the search is a new camera module 11 yet to be activated.

If it is determined in step S35 that the camera module 11 found by the search is a new camera module 11 yet to be activated, the process proceeds to step S36.

In step S36, the optimal camera configuration search unit 51 controls the control unit 33 of the new camera module 11 to activate the new camera module 11.

The imaging units 31 of the camera module 11 which is an always-on camera and the new camera module 11 each generate a camera input image by capturing an image of the user's face, and output the generated camera input images to the facial detection unit 42. Subsequently, the process returns to step S31, and the subsequent processing is repeated in the activated camera module 11 and the information processing device 21.

If it is determined in step S35 that the camera module 11 found by the search is not a new camera module 11 yet to be activated, the camera module search processing in Fig. 6 ends.

### <Detection of facial area and facial part points>

Fig. 7 illustrates an example of the facial area detected in step S31 in Fig. 6.

Similarly to Fig. 1, Fig. 7 illustrates the imaging range 2 to be captured by the imaging unit 31 of the camera module 11-8 which is the always-on camera. Fig. 7 also illustrates the facial area 71 detected in the camera input image in the imaging range 2.

The camera input image in the imaging range 2 is supplied to the facial detection unit 42 from the imaging unit 31. The facial detection unit 42 detects the user's facial area 71 in the camera input image in the imaging range 2. The facial part detection unit 43 detects facial part points in the facial area 71 detected by the facial detection unit 42.

In the camera module search processing shown in Fig. 6, the detection processing of the facial area 71 in the camera input image captured by the camera module 11 and the detection processing of the facial part points may be repeated until the facial part points are detected.

### <Estimation of facial position and facial angle>

Fig. 8 is a diagram for illustrating examples of the position and angle of the face estimated in step S33 in Fig. 6.

Similarly to Fig. 7, Fig. 8 illustrates the facial area 71 detected in the camera input image of the camera module 11-8, which is an always-on camera.

The position and angle estimation unit 44 is supplied with the camera input image, information about the facial area 71, and the facial part point information supplied by the facial part detection unit 43.

When there is only one camera module 11 that is activated, the position and angle estimation unit 44 estimates the distance d and the height h of the user's face on the basis of the size of the facial area 71.

In addition, the position and angle estimation unit 44 estimates the facial angle a (dashed arrow) indicating the angle of the face when the horizontal is 0 degrees, on the basis of the facial part point information. In the case of Fig. 8, the facial angle a is 0 degrees.

In addition, when there are multiple camera modules 11 that are activated, the 3D position and the angle of the face are estimated using stereo vision on the basis of the facial part point information supplied by each camera module 11.

In this case, for example, all the pieces of detected facial part point information from the activated camera modules 11 may be collected in the position and angle estimation unit 44 of a single camera module 11, and the 3D position and angle of the face may be estimated using stereo vision on the basis of the collected multiple pieces of facial part point information.

Furthermore, the camera module 11 that estimates the 3D position and angle of the face using stereo vision may be an always-on camera or may be any of the camera modules 11 other than the always-on camera. In addition, the position and angle estimation unit in the information processing device 21 may be configured to estimate the 3D position and angle of the face on the basis of multiple pieces of facial part point information using stereo vision.

### <Search for optimal camera module>

Fig. 9 is a diagram for illustrating an example of how the optimal camera module is searched for in step S34 in Fig. 6.

Fig. 9 illustrates the facial angle a (dashed arrow) estimated as described above in Fig. 8 and the angles a2, a5, a8, and a11 of the camera modules 11-2, 11-5, 11-8, and 11-11, respectively with respect to the user's face.

The optimal camera configuration search unit 51 can determine the angles a2, a5, a8, and a11 of the camera modules 11-2, 11-5, 11-8, and 11-11, respectively with respect to the user's face on the basis of the information about the position and angle a of the face supplied by the position and angle estimation unit 44, the camera ID of the camera module 11-1, and the information registered in the camera configuration DB 52.

The optimal camera configuration search unit 51 can search for the optimal camera module for facial recognition by searching for the camera module 11-5 that has the smallest angle difference (e.g., the angle a5 indicated by the bold line) from the facial angle a estimated by the position and angle estimation unit 44, among those angles. Fig. 9 illustrates the angle of the face in the vertical direction, while the angle of the face in the horizontal direction is estimated in the same way, and the estimated angle of the face is used to search for the camera module.

Subsequently, as described above, the optimal camera configuration search unit 51 activates the camera module 11 if the camera module 11-5 determined as the optimal camera module by the search is a new camera module 11 yet to be activated.

### <Authentication processing>

Fig. 10 is a flowchart for illustrating the authentication processing in step S12 in Fig. 5.

In step S51, one of the activated camera modules 11 is extracted. The imaging unit 31 of the extracted camera module 11 captures an image of the user's face to generate a camera input image, and outputs the generated camera input image to the facial detection unit 42.

In step S52, the facial detection unit 42 detects the user's facial area in the camera input image supplied by the imaging unit 31. The camera input image and the facial area information indicating the detected facial area are output to the facial part detection unit 43.

In step S53, the facial part detection unit 43 detects facial part points in the facial area detected by the facial detection unit 42. The facial part detection unit 43 outputs the camera input image, the facial area information, and the facial part point information indicating the detected facial part points to the face image normalization unit 45.

In step S54, the face image normalization unit 45 normalizes the face image using the camera input image, the facial area information, and the facial part point information supplied by the facial part detection unit 43. The face image normalization unit 45 outputs the normalized face image, the facial area information, and the facial part point information to the facial feature value extraction unit 46.

In step S55, the facial feature value extraction unit 46 extracts facial feature values using the normalized face image, the facial area information, and the facial part point information supplied by the face image normalization unit 45.

The facial feature value extraction unit 46 transmits the facial feature value information indicating the extracted facial feature values, together with its own camera ID, to the facial feature value integration unit 53 of the information processing device 21.

In step S56, the facial feature value integration unit 53 determines whether the camera module 11 extracted in step S51 is the last camera module 11 yet to be extracted among the activated camera modules 11. If it is determined in step S56 that the extracted camera module 11 is not the last camera module 11, the process returns to step S51 and the subsequent processing is repeated.

If it is determined in step S56 that the extracted camera module 11 is the last camera module 11, the process proceeds to step S57.

In step S57, the facial feature value integration unit 53 performs facial feature value integration on the basis of the facial feature value information supplied by the facial feature value extraction units 46 of all the activated camera modules 11 and the camera IDs. The facial feature value integration unit 53 outputs the integrated facial feature value information, which indicates the integrated facial feature value, to the facial matching unit 54.

In step S58, the facial matching unit 54 refers to the information registered in the camera configuration DB 52 and performs matching between the integrated facial feature value indicated by the integrated facial feature value information supplied by the facial feature value integration unit 53 and the registered facial feature values registered in the registered facial feature value DB 55.

In step S59, the facial matching unit 54 determines whether the matching is successful. If for example the similarity in the matching between the integrated facial feature value and registered facial feature values is greater than or equal to a prescribed threshold, the matching is determined to be successful. When it is determined in step S59 that the matching is successful, the authentication processing in Fig. 10 ends.

Meanwhile, when it is determined that the matching is not successful in step S59, the process proceeds to step S60.

In step S60, the facial matching unit 54 determines whether the number of activated camera modules 11 has reached the set maximum camera module number. If it is determined in step S60 that the number of the activated camera modules 11 has not reached the maximum camera module number, the process proceeds to step S61.

In step S61, the optimal camera configuration search unit 51 searches for the optimal camera module among the camera modules 11 yet to be activated. In other words, the optimal camera configuration search unit 51 searches, among the camera modules 11 yet to be activated, for the camera module 11 that has the smallest angular difference for the detected face among the camera modules 11 yet to be activated.

In step S62, the optimal camera configuration search unit 51 activates the camera module 11 found by the search. Then, the process returns to step S51 and the subsequent processing is repeated.

If it is determined in step S60 that the number of activated camera modules 11 has reached the maximum camera module number, authentication is unsuccessful and the authentication processing in Fig. 10 ends.

### <Advantageous effects of present technology>

Fig. 11 is a schematic diagram for illustrating the operation of the camera modules 11 and the information processing device 21 in the facial recognition system 1.

In the facial recognition system 1 in Fig. 11, the processing in steps S52 to S55 in Fig. 10 is performed in each of the camera modules 11-1 to 11-3. In the information processing device 21, the processing in steps S56 and S57 in Fig. 10 is performed.

In a conventional system, even the camera modules 11 that do not need to be activated are activated. Therefore, for example, if the camera module 11-3 on the left side has captured only a part of the user's profile because the user stands at the right end in front of door 12, the camera module 11-3 has wasted power for the processing in steps S52 to S55 in Fig. 10.

In contrast, according to the present technology, only the camera module 11-1 that captures a frontal image of the user's face and the camera module 11-2 that is necessary for authentication in the surrounding area are activated to perform the processing in steps S52 to S55 of Fig. 10.

In other words, according to the present technology, the camera module 11-3, which is not necessary for authentication, is not activated, so that in the camera module 11-3, the power consumption for the processing in steps S52 to S55 in Fig. 10 can be saved.

In the example described above, the always-on camera is preset. The always-on camera may be set when the facial recognition system 1 is shipped or when the facial recognition system 1 is installed, or may also be set automatically by the facial recognition system 1.

### <Setting of always-on camera>

Fig. 12 is a diagram for illustrating an example of how an always-on camera is set.

On the left side of Fig. 12, an example is shown in which all camera modules 11 are set as always-on cameras after the installation of the facial recognition system 1, in order to determine which camera module 11 is to be set as the always-on camera.

The information processing device 21 of the facial recognition system 1 keeps a record of the number of times each camera module 11 has been used for authentication, as well as the date and time, and sets only the camera module 11 that has been used for authentication a certain number of times as the always-on camera on the basis of the recorded number of times or date and time.

On the right side of Fig. 12, an example is shown in which the camera modules 11-2, 11-5, and 11-9 that have been used for authentication a certain number of times are set as the always-on cameras.

In this way, simply installing the facial recognition system 1 allows the system to be adjusted to various users, such as tall users and those who regularly use a wheelchair.

The always-on camera can be set and switched at different times.

### <2. Second Embodiment (Human body authentication system>

### <Configuration of human body authentication system>

Fig. 13 illustrates a configuration example of the external appearance of a human body authentication system according to a second embodiment of the present technology.

Fig. 13 illustrates, for example, a human body authentication system 101 installed in an unmanned convenience store.

The human body authentication system 101 is configured to include camera modules 111-1 to 111-10 and a human detection sensor 112.

The camera modules 111-1 to 111-8 are installed on the walls and shelves so that these camera modules can capture images of aisles r1 to r8 and images of customers (users) in the aisles.

The camera module 111-1 is installed on a wall or shelf so that the camera module can capture images of the aisle r1. The camera module 111-2 is installed on a wall or shelf that can capture images of the aisle r2. The camera module 111-3 is installed on a wall or shelf that can capture images of the aisle r3. The camera module 111-4 is installed on a wall or shelf that can capture images of the aisle r4.

The camera module 111-5 is installed on a wall or shelf that can capture images of aisle r5. The camera module 111-6 is installed on a wall or shelf so that the camera module can capture images of aisle r6. The camera module 111-7 is installed on a wall or shelf so that the camera module can capture images of the aisle r7. The camera module 111-8 is installed on a wall or shelf so that the camera module can capture images of the aisle r8.

The camera modules 111-9 and 111-10 can capture 360-degree images and are installed in the ceiling. When there is no need to distinguish between individual camera modules 111-1 to 111-10, these camera modules are collectively referred to as camera module 111.

At least one of the camera modules 111 (in the case of Fig. 13, the camera modules 111-1, 111-2, 111-9, and 111-10) serves as an always-on camera which is always activated. The camera modules 111 other than the always-on cameras are normally in a stopped state, similarly to the camera modules 11 in Fig. 1.

The camera module 111, which serves as an always-on camera, may be configured to be activated in response to a signal from the human detection sensor 112.

At least one of the camera modules 111-1 and 111-2, which serve as always-on cameras, captures an image of the body of a user who has entered the store. At least one of the camera modules 111-9 and 111-10, which serve as always-on cameras, captures an image of the body of a user who has entered the store. The camera modules 111 other than the always-on cameras are activated in response to the control of the human body authentication system 101 and capture images of the human bodies of users in the corresponding aisles.

The human detection sensor 112 detects a user entering the store and transmits a signal indicating the detection to the always-on camera.

The human body authentication system 101 registers feature values extracted from images of the human body captured by at least one of the always-on camera modules 111-1 and 111-2.

The human body authentication system 101 continues to detect the user's body using human body images captured by at least one of the camera modules 111-9 and 111-10, which serves as always-on cameras and estimates the position and angle of the user's body using the captured human body images.

Furthermore, the human body authentication system 101 searches for a camera module 111 that is not activated among the camera modules 111 that can capture images of the user's body from the most frontal position according to the estimated position and angle of the user's body.

The human body authentication system 101 activates the camera module 111 found by the search, controls the activated camera module 111, extracts the user's human body feature values, and authenticates the user's human body. When the user's body is authenticated, information such as which product the authenticated user has taken off the shelf or which product has been purchased at the checkout is associated with the user.

The human body authentication system 101 performs the described processing for each user. For example, if there are multiple users in the store and a camera module 111 has already been activated by another user other than the target user, the image captured by the camera module 111 already activated by that other user may be used to authenticate the target user's body.

A stop time to stop the camera modules 111 other than the always-on cameras may also be set. For example, a stop time from the start of activation to the time of stopping may be set.

As described above, in the human body authentication system 101, the camera modules 111 that are not necessary are not activated, so that the human body authentication can be continuously performed, and the products picked up by the user for example can be detected with the minimum camera module configuration.

### Functional configuration of human body authentication system

Fig. 14 is a block diagram of a functional configuration example of the human body authentication system shown in Fig. 13.

In Fig. 14, the human body authentication system 101 is configured to include camera modules 111-1, 111-2, ..., a human detection sensor 112, and a server 121.

The camera module 111 is configured to include an imaging unit 131 and a control unit 132.

The imaging unit 131 captures an image of an object and outputs a camera input image obtained by capturing the image of the object to the detection and estimation unit 141 of the server 121.

The control unit 132 controls the imaging unit 131 of the camera module 111 in response to control from the server 121. The control unit 132 activates or stops the camera modules 111 in response to control from the server 121.

The server 121 is configured to include the detection and estimation unit 141, an optimal camera configuration search unit 142, a camera configuration DB 143, a human body feature value integration unit 144, a human body matching unit 145, and a registered human body feature value DB 146.

Note that the detection and estimation unit 141, the optimal camera configuration search unit 142, the camera configuration DB 143, the human body feature value integration unit 144, the human body matching unit 145, and the registered human body feature value DB 146 are substantially the same as the detection and estimation unit 32, the optimal camera configuration search unit 51, the camera configuration DB 52, the facial feature value integration unit 53, the facial matching unit 54, and the registered facial feature value DB 55 in Fig. 2 and perform the same processing, with the difference being that the processing target is the user's body instead of the user's face.

The detection and estimation unit 141 is configured to include a human body detection unit 151, a human body part detection unit 152, a position and angle estimation unit 153, a human body image normalization unit 154, and a human body feature value extraction unit 155.

The human body detection unit 151, the human body part detection unit 152, the position and angle estimation unit 153, the human body image normalization unit 154, and the human body feature value extraction unit 155 perform substantially the same processing as the facial detection unit 42, the facial part detection unit 43, the position and angle estimation unit 44, the face image normalization unit 45, and the facial feature value extraction unit 46 in Fig. 2, with the only difference being that the processing target is the user's human body instead of their face.

In the human body authentication system 101 in Fig. 14, the detection and estimation unit 141 is provided on the server 121, but the detection and estimation unit 141 may be provided in each camera module 111, similarly to the facial recognition system 1 in Fig. 1 according to the first embodiment described above.

The lensless camera that will be described may be used as the imaging unit 31 of the camera module 11 according to the first embodiment described above or as the imaging unit 131 of the camera module 111 according to the second embodiment.

### <Configuration of lensless camera>

Fig. 15 illustrates a configuration example of a lensless camera that forms an image without the use of a lens.

In Fig. 15, the lensless camera 171 is configured to include an optical element plate 181, a light-transmission section 182, and an imaging device 183.

The optical element plate 181 is a thin plate that has a transparent zone through which light passes and an opaque zone which blocks light. The optical element plate 181 is arranged in a position corresponding to the imaging device 183 and opposed to the light-receiving surface of the imaging device 183.

The light-transmission section 182 has a transparent zone (micropores) through which light passes and is formed on the optical element plate 181. The light-transmission section 182 has a transparent zone in a form corresponding to various types of lensless image-forming optical elements, such as pinholes, a zone plate like a Fresnel zone plate, and a photon sieve.

The imaging device 183 includes an optical element that forms an optical image of an object. The imaging device 183 may be a CMOS (Complementary Metal Oxide Semiconductor) image sensor, a CCD (Charge Coupled Device) image sensor, or any other type of device.

The lensless camera 171 as described above transmits light through the light-transmission section 182 and forms an image on the imaging device 183.

Using the lensless camera 171 in Fig. 15 as the imaging unit of the camera module according to the present technology, images can be captured through holes that are invisible to the user (e.g., holes with a diameter of 1 mm or less).

For example, in the case of the facial recognition system 1 in Fig. 1, this may allow the user to unlock the door simply by approaching the door without being aware of the cameras, so that the user can enjoy the service (i.e., unlocking the door) with a more natural user interface (UI).

Normally, if the user is unaware of the camera, authentication becomes difficult because the user does not turn towards the camera, but by arranging multiple cameras according to the first and second embodiments of the present technology, authentication can be carried out smoothly even if the user is unaware of the camera. Furthermore, the present technology allows for reduction in power consumption even when multiple cameras are provided.

### <3. Third Embodiment (Wearable device)>

Fig. 16 is a view of a configuration example of the appearance of a wearable device according to a third embodiment of the present technology.

The wearable device 201 in Fig. 16 is a wrist-type wearable device.

In Fig. 16, the wearable device 201 is configured to include camera modules 211-1 to 211-6, a display unit 212, and a wristband 213.

The camera modules 211-1 to 211-6 are provided on the surface of the display unit 212. The camera module 211-1 is provided in the center in the top row on the surface of the display unit 212. The camera module 211-2 is provided on the left side in the second row from the top of the display unit 212. The camera module 211-3 is provided on the right side in the second row from the top on the surface of the display unit 212.

The camera module 211-4 is located on the left side in the third row from the top on the surface of the display unit 212. The camera module 211-5 is located on the right side in the third row from the top on the surface of the display unit 212. The camera module 211-6 is located in the center in the bottom row on the surface of the display unit 212. When there is no need to individually distinguish between the camera modules 211-1 to 211-6, these camera modules are collectively referred to as the camera module 211.

At least one of the camera modules 211 (in the case of Fig. 16, the camera module 211-1) is an always-on camera and is always activated.

The camera module 211-1, which serves as an always-on camera, captures an image of QR codes^{®}.

In Fig. 16, the imaging range 215 to be captured by the camera module 211-1, which serves as the always-on camera, is shown. The imaging range 215 is represented by the base of the triangle formed by the camera module 211-1 at the apex in Fig. 16.

The wearable device 201 uses the same mechanism as the first embodiment to search for other camera modules 211 that can read a QR code on the basis of the relative position and angle of the QR code estimated using the image captured by the camera module 211-1, and activates the camera module 211 found by the search.

The wearable device 201 then controls the activated camera module 211 to recognize the image-captured QR code and perform processing such as payment on the basis of the recognized QR code.

In the wearable device 201 configured as described above, if the lensless camera 171 in Fig. 15 is used as the camera module 211, the user may not be able to read the QR code properly because the position of the camera module 211 is unknown.

However, by arranging multiple camera modules 211 and activating the cameras according to the embodiment, only the camera in a position that allows the camera to read and recognize the QR code can be activated appropriately. In this way, the QR code can be read while reducing battery consumption.

The configuration according to the third embodiment is substantially the same as that of the first embodiment. However, according to the third embodiment, the SoC (System on Chip) mounted on the wearable device 201 is used instead of the information processing device 21 in Fig. 1.

In the description in conjunction with Fig. 16, the QR code is used, while the present technology can also be applied to other codes.

### <4. Others>

### <Advantageous effects of present technology>

As in the foregoing, according to the present technology, On the basis of the position and angle of an object estimated from an image captured by an activated camera among multiple cameras, camera search processing is performed to search for a camera among non-activated cameras that is suitable for authenticating the object, and then activate the camera found by the search.

In this way, the power consumption can be reduced.

In the above description, the target objects to be authenticated (recognized) include faces, human bodies, and QR codes, but the present technology can be applied to the recognition of any type of object.

### <Configuration example of computer>

The above-described series of processing can also be executed by hardware or software. When the series of processing is performed by software, a program for the software is embedded in dedicated hardware to be installed from a program recording medium to a computer or a general-purpose personal computer.

Fig. 17 is a block diagram illustrating a configuration example of computer hardware that executes the above-described series of processing using a program.

A CPU (Central Processing Unit) 301, a read-only memory (ROM) 302, and a random access memory (RAM) 303 are connected with one another by a bus 304.

An input/output interface 305 is further connected to the bus 304. An input unit 306 including a keyboard or a mouse and an output unit 307 including a display or a speaker are connected to the input/output interface 305. In addition, a storage unit 308 including a hard disk or a nonvolatile memory, a communication unit 309 including a network interface, a drive 310 driving a removable medium 311 are connected to the input/output interface 305.

In the computer configured as described above, for example, the CPU 301 loads a program stored in the storage unit 308 onto the RAM 303 via the input/output interface 305 and the bus 304 and executes the program to perform the series of processing steps described above.

For example, the program executed by the CPU 301 is recorded on the removable medium 311 or provided via a wired or wireless transfer medium such as a local area network, the Internet, or a digital broadcast to be installed in the storage unit 308.

Note that the program executed by a computer may be a program that performs processing chronologically in the order described in the present specification or may be a program that performs processing in parallel or at a necessary timing such as a called time.

Meanwhile, in the present specification, a system is a collection of a plurality of constituent elements (devices, modules (components), or the like) and all the constituent elements may be located or not located in the same casing. Thus, a plurality of devices housed in separate housings and connected via a network, and one device in which a plurality of modules are housed in one housing are both systems.

In addition, the advantages described in the present specification are merely exemplary and not limited, and other advantages may be obtained.

The embodiments of the present technology are not limited to the aforementioned embodiments, and various changes can be made without departing from the gist of the present technology.

For example, the present technology can be configured as cloud computing in which one function is shared and processed in common by a plurality of devices via a network.

In addition, each step described in the above flowchart can be executed by one device or executed in a shared manner by a plurality of devices.

Furthermore, in a case in which one step includes a plurality of processes, the plurality of processes included in the one step can be executed by one device or executed in a shared manner by a plurality of devices.

### <Combination example of configurations>

The present technology can also have the following configurations.
(1) An information processing device comprising a control unit configured to perform camera search processing of searching for a camera suitable for authentication of a target among non-activated cameras which are yet to be activated, on the basis of a position and an angle of the target estimated from an image captured by an active camera which is an activated camera among multiple cameras, and activating the camera found by the search.
(2) The information processing device according to (1), wherein the control unit ends the camera search processing when the camera found by the search is the active camera, and activates the camera found by the search and repeats the camera search processing when the camera found by the search is the non-activated camera.
(3) The information processing device according to (1) or (2), wherein the control unit performs authentication processing of matching between a target in an image captured by the active camera and a target in a registered image, and, when the matching is unsuccessful, searching for a camera suitable for authentication of the target among the non-activated cameras , and activating the camera found by the search.
(4) The information processing device according to (3), wherein the control unit ends the authentication processing when the number of the active cameras has reached a prescribed number, and activates the camera found by the search and repeats the authentication processing when the number of the active cameras has not reached the prescribed number.
(5) The information processing device according to (3), wherein at least one of the active cameras is an always-on camera which is always activated, and
   the control unit stops the active camera except for the always-on camera when the authentication processing ends.
(6) The information processing device according to (5), wherein the control unit sets the always-on camera according to the number of times the multiple cameras have been used or dates on and times at the multiple cameras have been used for the authentication processing.
(7) The information processing device according to (3), wherein at least one of the active cameras is an always-on camera, and
   the control unit sets time up to which the active cameras except for the always-on camera stop.
(8) The information processing device according to any one of (1) to (7), comprising the multiple cameras.
(9) The information processing device according to (8), wherein the multiple cameras each comprise
   an imaging unit configured to capture an image of the target, and
   an estimation unit configured to estimate a position and an angle of the target on the basis of the captured image.
(10) The information processing device according to (9), wherein the imaging unit of the non-activated camera is activated while the estimation unit is not activated, and the control unit activates the estimation unit of the camera found by the search.
(11) The information processing device according to (9), wherein the imaging unit and the estimation unit of the non-activated camera are not activated, and
   the control unit activates the imaging unit and the estimation unit of the camera found by the search.
(12) The information processing device according to (8), wherein
   the multiple cameras each comprise an imaging unit configured to capture an image of the target.
(13) The information processing device according to (12), wherein the imaging unit of the non-activated camera is not activated, and
   the control unit activates the imaging unit of the camera found by the search.
(14) The information processing device according to (12), further comprising an estimation unit configured to estimate a position and an angle of the target on the basis of the captured image.
(15) The information processing device according to any one of (1) to (14), wherein the multiple cameras are lensless cameras.
(16) The information processing device according to any one of (1) to (15), wherein the target is a face or a human body.
(17) The information processing device according to any one of (1) to (15), wherein the target is a code.
(18) An information processing method comprising, by an information processing device, performing camera search processing of
   searching for a camera suitable for authentication of a target among non-activated cameras yet to be activated, on the basis of a position and an angle of the target estimated from an image captured by an active camera which is an activated camera among multiple cameras, and activating the camera found by the search.
(19) A program for causing a computer to function as a control unit configured to perform camera search processing of searching for a camera suitable for authentication of a target among non-activated cameras yet to be activated, on the basis of a position and an angle of the target estimated from an image captured by an active camera which is an activated camera among multiple cameras, and activating the camera found by the search.

### [Reference Signs List]

- 1: Facial recognition system
- 11, 11-1 to 11-12: Camera module
- 12: Door
- 21: Information processing device
- 22: Locking mechanism
- 31: Imaging unit
- 32: Detection and estimation unit
- 33: Control unit
- 42: Facial detection unit
- 43: Facial part detection unit
- 44: Face image normalization unit
- 45: Facial feature value extraction unit
- 46: Facial position and angle estimation unit
- 51: Optimal camera configuration search unit
- 52: Camera configuration DB
- 53: Facial feature value integration unit
- 54: Facial matching unit
- 55: Registered facial feature value DB
- 101: Human body authentication system
- 111, 111-1 to 111-10: Camera module
- 112: Human detection sensor
- 121: Server
- 131: Imaging unit
- 132: Control unit
- 141: Detection and estimation unit
- 142: Optimal camera configuration search unit
- 143: Camera configuration DB
- 144: Human body feature value integration unit
- 145: Human body matching unit
- 146: Registered human body feature value DB
- 151: Human body detection unit
- 152: Human body part detection unit
- 153: Position and angle estimation unit
- 154: Human body image normalization unit
- 155: Human body feature value extraction unit
- 171: Lensless camera
- 181: Optical element plate
- 182: Light-transmission section
- 183: Imaging device
- 201: Wearable device
- 211, 211-1 to 211-6, 212: Display unit
- 213: Wristband

## Claims

1. An information processing device comprising a control unit configured to perform camera search processing of searching for a camera suitable for authentication of a target among non-activated cameras which are yet to be activated, on the basis of a position and an angle of the target estimated from an image captured by an active camera which is an activated camera among multiple cameras, and activating the camera found by the search.

2. The information processing device according to claim 1, wherein the control unit ends the camera search processing when the camera found by the search is the active camera, and activates the camera found by the search and repeats the camera search processing when the camera found by the search is the non-activated camera.

3. The information processing device according to claim 2, wherein the control unit performs authentication processing of matching between a target in an image captured by the active camera and a target in a registered image, and, when the matching is unsuccessful, searching for a camera suitable for authentication of the target among the non-activated cameras , and activating the camera found by the search.

4. The information processing device according to claim 3, wherein the control unit ends the authentication processing when the number of the active cameras has reached a prescribed number, and activates the camera found by the search and repeats the authentication processing when the number of the active cameras has not reached the prescribed number.

5. The information processing device according to claim 3, wherein
at least one of the active cameras is an always-on camera which is always activated, and
the control unit stops the active camera except for the always-on camera when the authentication processing ends.

6. The information processing device according to claim 5, wherein the control unit sets the always-on camera according to the number of times the multiple cameras have been used or dates on and times at the multiple cameras have been used for the authentication processing.

7. The information processing device according to claim 3, wherein at least one of the active cameras is an always-on camera, and
the control unit sets time up to which the active cameras except for the always-on camera stop.

8. The information processing device according to claim 1, comprising the multiple cameras.

9. The information processing device according to claim 8, wherein the multiple cameras each comprise
an imaging unit configured to capture an image of the target, and
an estimation unit configured to estimate a position and an angle of the target on the basis of the captured image.

10. The information processing device according to claim 9, wherein the imaging unit of the non-activated camera is activated while the estimation unit is not activated, and
the control unit activates the estimation unit of the camera found by the search.

11. The information processing device according to claim 9, wherein
the imaging unit and the estimation unit of the non-activated camera are not activated, and
the control unit activates the imaging unit and the estimation unit of the camera found by the search.

12. The information processing device according to claim 8, wherein
the multiple cameras each comprise an imaging unit configured to capture an image of the target.

13. The information processing device according to claim 12, wherein
the imaging unit of the non-activated camera is not activated, and
the control unit activates the imaging unit of the camera found by the search.

14. The information processing device according to claim 12, further comprising an estimation unit configured to estimate a position and an angle of the target on the basis of the captured image.

15. The information processing device according to claim 1, wherein the multiple cameras are lensless cameras.

16. The information processing device according to claim 1, wherein the target is a face or a human body.

17. The information processing device according to claim 1, wherein the target is a code.

18. An information processing method comprising, by an information processing device, performing camera search processing of searching for a camera suitable for authentication of a target among non-activated cameras yet to be activated, on the basis of a position and an angle of the target estimated from an image captured by an active camera which is an activated camera among multiple cameras, and activating the camera found by the search.

19. A program for causing a computer to function as a control unit configured to perform camera search processing of searching for a camera suitable for authentication of a target among non-activated cameras yet to be activated on the basis of a position and an angle of the target estimated from an image captured by an active camera which is an activated camera among multiple cameras, and activating the camera found by the search.
